# EUROPÄISCHE PATENTANMELDUNG

(11) **EP 3 435 512 A1**
(43) Veröffentlichungstag der Anmeldung: **30.01.2019**
(21) Anmeldenummer: 18182382.4
(22) Anmeldetag: 09.07.2018
(51) Int. Cl.: H02J 7/00, H02J 7/04, H02H 3/32, H02H 3/33, H02H 1/00, H02H 7/18

(54) **LADESTATION MIT DIFFERENZSTROMÜBERWACHUNG ZUM AUFLADEN EINES ELEKTRISCHEN ENERGIESPEICHERS EINES ELEKTROFAHRZEUGS**

(30) Priorität: 18.07.2017 DE 102017212302
(71) Anmelder: Bender GmbH & Co. KG, 35305 Grünberg (DE)
(72) Erfinder: MEHLING, Frank, 63691 Ranstadt (DE); SCHÄFER, Sven, 35321 Laubach (DE)
(74) Vertreter: advotec.

(57) **Zusammenfassung**

Die Erfindung betrifft eine Ladestation zum Aufladen eines elektrischen Energiespeichers eines Elektrofahrzeugs mit einem Wechsel-Ladestrom, mit einer Fehlerstrom-Schutzeinrichtung und mit einem Laderegler.

In einer ersten Lösung beruht der Grundgedanke darauf, die Fehlerstrom-Schutzeinrichtung modular auszuführen. Dabei wird die modulare Fehlerstrom-Schutzeinrichtung in ihre Funktionseinheiten zergliedert, wobei erfindungsgemäß eine Differenzstrom-Überwachungseinheit mit dem Laderegler eine integrale bauliche Einheit in Form einer Ladestrom-Regel- und Überwachungseinrichtung bildet mit separat angeordnetem Messstromwandler und Schaltelement.

In einer alternativen Lösung bildet die Fehlerstrom-Schutzeinrichtung mit dem Laderegler eine integrale bauliche Einheit in Form einer Ladestrom-Regel- und Schutzeinrichtung.

## Beschreibung

Die Erfindung betrifft eine Ladestation zum Aufladen eines elektrischen Energiespeichers eines Elektrofahrzeugs mit einem Wechsel-Ladestrom, mit einer Fehlerstrom-Schutzeinrichtung und mit einem Laderegler.

Zum Betrieb eines Elektrofahrzeugs oder eines Hybridfahrzeugs ist es bekanntermaßen erforderlich, den elektrischen Energiespeicher des Elektrofahrzeugs regelmäßig an einer Ladestation aufzuladen. Dabei ist eine an die Betriebsdaten des Energiespeichers des Elektrofahrzeugs angepasste und zeiteffiziente Ladestromregelung unerlässlich.

Die vorliegende Erfindung geht von einer Aufladung mit einem Wechsel-Ladestrom aus, wobei ein entsprechender Laderegler in der Ladestation angeordnet ist. Somit kann auf eine Ladestromregelung in dem Elektrofahrzeug verzichtet werden, was eine Kosten- und Gewichtsersparnis für das Elektrofahrzeug bedeutet.

Hinsichtlich der elektrischen Sicherheit sind während des Ladevorgangs sicherheitstechnische Vorkehrungen zu treffen, um eine Gefährdung der handelnden Personen auszuschließen und um Sachschäden zu vermeiden.

Infolge der elektrischen Verbindung zwischen Elektrofahrzeug und Ladestation entsteht aus dem zuvor ungeerdeten Bordnetz des Elektrofahrzeugs im Verbund mit einem stationären geerdeten Stromversorgungssystem ein übergreifendes geerdetes System mit Wechsel- und Gleichspannungs-/Gleichstromkomponenten. Neben einer Isolations-überwachung ist daher eine zuverlässig arbeitende Fehlerstrom-Schutzeinrichtung von Bedeutung. Im Folgenden wird unter dem Begriff Fehlerstrom-Schutzeinrichtung eine allgemeine Fehlerstrom-Schutzeinrichtung mit den Funktionen (funktionalen Elementen) Erfassung eines Fehlerstroms als Differenzstrom, Auswertung des Fehlerstroms durch Überwachung des Differenzstroms und mit einer schaltender Funktion verstanden. Spezielle bauliche Ausführungen (körperliche Ausgestaltungen) der Fehlerstrom-Schutzeinrichtung werden als Fehlerstrom-Schutzeinrichtung RCD (Residual Current Device) Typ A gemäß der Norm IEC 61008-1//DIN EN 61008-1 (VDE 0664-10) oder RCD Typ B gemäß der Norm IEC 62423//DIN EN 62423 (VDE 0664-40) bezeichnet.

Aus dem Stand der Technik ist beispielsweise in der Offenlegungsschrift DE 10 2010 028 626 A1 die Möglichkeit aufgezeigt, das System aus Ladestation und Fahrzeug durch eine in der Ladestation angebrachte Fehlerstrom-Schutzeinrichtung RCD Typ A zu überwachen. Diese Fehlerstrom-Schutzeinrichtung RCD Typ A ist in der Lage, Fehlerwechselströme und pulsierende Fehlergleichströme zu erfassen.

Falls die EV-Ladestation mit einer Steckdose oder Fahrzeugkupplung nach der Normenreihe IEC 62196//DIN EN 62196 (VDE 0623) ausgestattet ist, muss nach den Normen IEC 61851-1 sowie IEC 60364-7-722 (VDE 0100-722) eine Fehlerstrom-Schutzeinrichtung (RCD) Typ B oder eine Fehlerstrom-Schutzeinrichtung (RCD) Typ A in Verbindung mit einer geeigneten Einrichtung zur Abschaltung der Versorgung im Fall von Gleichfehlerströmen > 6 mA eingesetzt werden, um darüber hinaus glatte Fehler-Gleichströme (DC-Fehlerströme) zu erkennen.

Als nachteilig erweist sich bei diesen aus dem Stand der Technik bekannten Lösungen, dass die vorgeschlagenen Ladestationen aus einer Vielzahl von elektrischen Baugruppen mit teilweise redundanter Funktionalität bestehen, die einen hohen Verschaltungsaufwand und entsprechend großen Bauraum erfordern und damit die Kosten für die Herstellung und Installation der Ladestation erhöhen.

Der vorliegenden Erfindung liegt somit die Aufgabe zu Grunde, eine Ladestation zum Aufladen eines elektrischen Energiespeichers eines Elektrofahrzeugs zu entwerfen, die sich durch einen kosten- und funktionseffizienten Aufbau und eine kompakte Gestaltung auszeichnet.

Diese Aufgabe wird in Verbindung mit dem Oberbegriff des Anspruchs 1 dadurch gelöst, dass die Fehlerstrom-Schutzeinrichtung aus einem separat angeordneten Messstromwandler, aus einer Differenzstrom-Überwachungseinheit und aus einem separat angeordneten Schaltelement besteht, wobei die Differenzstrom-Überwachungseinheit mit dem Laderegler eine integrale bauliche Einheit in Form einer Ladestrom-Regel- und Überwachungseinrichtung bildet.

Der Grundgedanke dieser Lösung beruht darauf, die Fehlerstrom-Schutzeinrichtung modular auszuführen. Dabei wird die modulare Fehlerstrom-Schutzeinrichtung zunächst in die getrennten Funktionseinheiten (funktionale Elemente, siehe oben) Messstromwandler, Differenzstrom-Überwachungseinheit und Schaltelement zergliedert und entspricht damit einem modularen Fehlerstromgerät MRCD (Modular Residual Current Device) gemäß IEC 60947-2 Annex M//DIN EN 60947-2 Anhang M (VDE 0660-101).

Der separate Messstromwandler (Summenstromwandler) erfasst einen in aktiven Leitern einer Anschlussleitung zu dem Elektrofahrzeug auftretenden Fehlerstrom als Differenzstrom. Das von dem separaten Messstromwandler abgegebene Messsignal wird der Differenzstrom-Überwachungseinheit zugeführt und ausgewertet. Übersteigt der gemessene Differenzstrom eine Auslöseschwelle, wird also ein Fehlerstrom erkannt, steuert die Differenzstrom-Überwachungseinheit mittels Auslösesignal das - bezogen auf die Ladestrom-Regel- und Überwachungseinrichtung - extern angeordnete Schaltelement an, welches die Anschlussleitung zu dem Elektrofahrzeug auftrennt.

Durch den modularen Aufbau der Fehlerstrom-Schutzeinrichtung ist es nun möglich, erfindungsgemäß die Differenzstrom-Überwachungseinheit und den Laderegler in einer baulichen Einheit zu integrieren. Damit wird eine aus dem Laderegler und der Differenzstrom-Überwachungseinheit bestehende Ladestrom-Regel- und Überwachungseinrichtung geschaffen. In Verbindung mit einem separat angeordneten Schaltelement können mit dieser Lösung gegenüber dem Stand der Technik die Fehlerstrom-Schutzeinrichtung RCD Typ A oder Typ B eingespart und damit die Kosten und benötigter Bauraum reduziert werden.

In weiterer Ausgestaltung sind der separate Messstromwandler und die Differenzstrom-Überwachungseinheit allstromsensitiv ausgeführt.

Die allstromsensitive (Typ B) Ausführung der Differenzstrom-Überwachungseinheit in Verbindung mit einem geeigneten Messstromwandler ermöglicht neben der Erfassung und Erkennung von Fehlerwechselströmen und pulsierenden Fehlergleichströmen auch die Erfassung und Erkennung reiner Fehlergleichströme.

Vorteilhafterweise ist das separat angeordnete Schaltelement ein Lastschütz oder ein Lastrelais.

Im Falle eines durch die Differenzstrom-Überwachungseinheit erkannten Fehlerstroms oder bei Beendigung des Ladevorgangs durch den Laderegler wird in der Ladestrom-Regel- und Überwachungseinrichtung ein Auslösesignal erzeugt, welches das Lastschütz oder das Lastrelais ansteuert und daraufhin die Trennung der Anschlussleitung zu dem Elektrofahrzeug bewirkt und so den Aufladevorgang unterbricht.

Weiterhin kann zwischen der Ladestrom-Regel- und Überwachungseinrichtung und dem an die Ladestation angeschlossenen Elektrofahrzeug ein Datenkommunikationskanal eingerichtet sein.

Über den Datenkommunikationskanal werden Daten zur Steuerung eines an den Energiespeicher des Elektrofahrzeuges angepassten Ladestroms wie beispielsweise elektrische Daten des Energiespeichers und Daten zur elektrischen Sicherheit wie beispielsweise der momentane Isolationswiderstand des Elektrofahrzeugs zur Einstellung einer geeigneten Differenzstrom-Auslöseschwelle übermittelt.

Die der Erfindung zu Grunde liegende Aufgabe wird alternativ in Verbindung mit dem Oberbegriff des Anspruchs 5 dadurch gelöst, dass die Fehlerstrom-Schutzeinrichtung mit dem Laderegler eine integrale bauliche Einheit in Form einer Ladestrom-Regel- und Schutzeinrichtung bildet, wobei die Ladestrom-Regel- und Schutzeinrichtung neben dem Laderegler einen internen Messstromwandler, eine Differenzstrom-Überwachungseinheit und ein internes Schaltelement umfasst.

In dieser Alternativlösung sind die funktionalen Elemente einer Fehlerstrom-Schutzeinrichtung zusammen mit dem Laderegler in einer baulichen Einheit integriert. Dadurch wird eine aus dem Laderegler und der Fehlerstrom-Schutzeinrichtung bestehende Ladestrom-Regel- und Schutzeinrichtung geschaffen, in der neben der Ladestromregelung auch die vollständige Funktionalität einer Fehlerstrom-Schutzeinrichtung integriert ist, nämlich die Differenzstromerfassung mittels eines internen Messstromwandlers, die Differenzstrom-Überwachungseinheit sowie das (interne) Schaltelement.

Auch bei dieser alternativen Lösung wird gegenüber dem Stand der Technik in kostensparender Weise auf eine Fehlerstrom-Schutzeinrichtung RCD Typ A oder Typ B als Bauteil verzichtet.

Weiterhin sind der interne Messstromwandler und die Differenzstrom-Überwachungseinheit allstromsensitiv ausgeführt.

Damit umfasst die Ladestrom-Regel- und Schutzeinrichtung die vollständige Funktionalität einer Fehlerstrom-Schutzeinrichtung RCD Typ B, sodass neben der Erfassung und Erkennung von Fehlerwechselströmen und pulsierenden Fehlergleichströmen auch die Erfassung und Erkennung reiner Fehlergleichströme ermöglicht wird.

Vorteilhafterweise ist das interne Schaltelement ein Lastrelais, welches im Falle eines durch die Differenzstrom-Überwachungseinheit erkannten Fehlerstroms oder einer durch den Laderegler festzustellenden Beendigung des Ladevorgangs mittels eines Auslösesignals angesteuert wird und die Trennung der Anschlussleitung zu dem Elektrofahrzeug bewirkt.

Weiterhin kann zwischen der Ladestrom-Regel- und Schutzeinrichtung und dem an die Ladestation angeschlossenen Elektrofahrzeug ein Datenkommunikationskanal eingerichtet sein.

Analog zu der ersten beschriebenen Lösung werden über den Datenkommunikationskanal Daten zur Steuerung eines an den Energiespeicher des Elektrofahrzeuges angepassten Ladestroms und die elektrische Sicherheit betreffende Daten übermittelt.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
- **Fig. 1A** und **1B:**: funktionale Blockdiagramme von Ausführungen einer Ladestation nach dem Stand der Technik,
- **Fig. 2:**: ein funktionales Blockdiagramm einer erfindungsgemäßen Ladestation und
- **Fig. 3:**: ein funktionales Blockdiagramm einer alternativen Ausführungsform einer erfindungsgemäßen Ladestation.

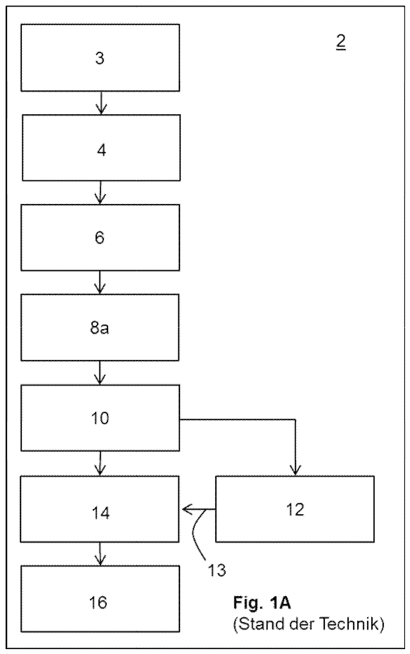

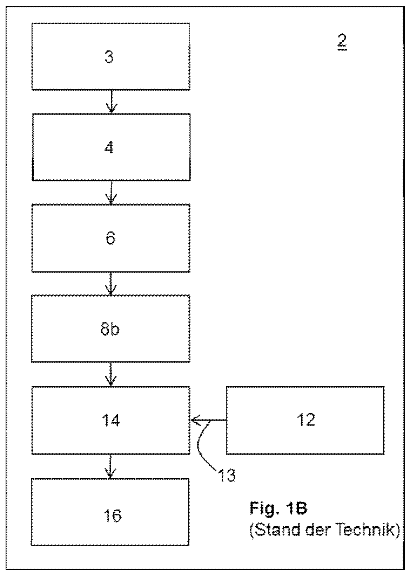

Die **Fig. 1A** und **1B** zeigen jeweils den Aufbau einer nach dem Stand der Technik bekannten Ladestation 2 für Elektrofahrzeuge.

Ausgehend von einem stationären Stromversorgungsystem weist die Ladestation 2 einen Netzanschluss 3 auf, der über eine Vorsicherung 4 abgesichert ist. Die Ladestation 2 verfügt über einen Energiemengenzähler 6 und eine Fehlerstrom-Schutzeinrichtung RCD Typ A 8a (**Fig. 1A**) oder Typ B 8b (**Fig. 1B**).

Im Fall der Ladestation 2 nach **Fig. 1A** weist diese neben dem in der Fehlerstrom-Schutzeinrichtung RCD Typ A 8a angeordneten ersten Messstromwandler einen zweiten Messstromwandler 10 zur Erfassung eines Fehlergleichstroms auf.

Der Laderegler 12 wirkt auf ein Schaltelement 14 ein, welches bei Auftreten eines Fehlergleichstroms oder bei Beendigung des Ladevorgangs eine Anschlussleitung zu einem Fahrzeuganschluss 16 auftrennt.

Im Fall der Ladestation 2 nach **Fig. 1B** weist diese eine Fehlerstrom-Schutzeinrichtung RCD Typ B 8b auf, welche in der Lage ist, Fehlerwechselströme, pulsierende Fehlergleichströme und (glatte) Fehlergleichströme zu erfassen und im Fehlerfall eine Abschaltung vornimmt.

Der Laderegler 12 wirkt bei Beendigung des Ladevorgangs über ein Auslösesignal 13 auf das Schaltelement 14 ein, um die Anschlussleitung zu dem Fahrzeuganschluss 16 aufzutrennen.

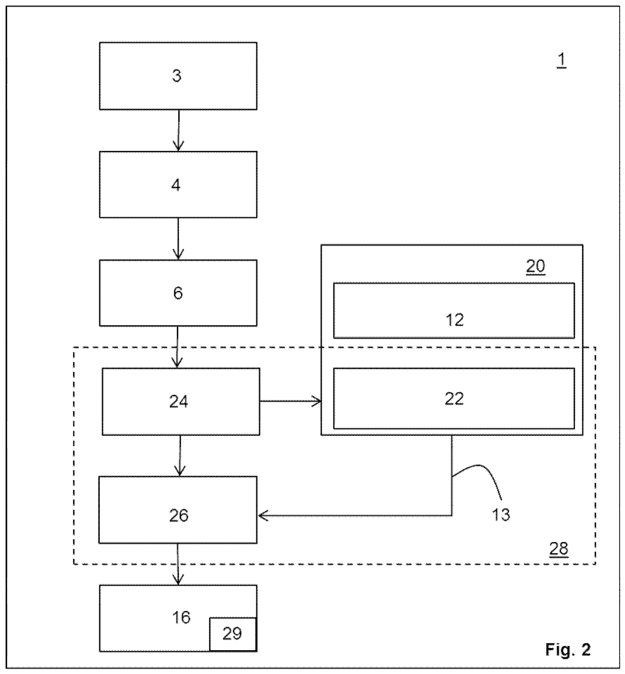

In **Fig. 2** ist ein funktionales Blockdiagramm einer erfindungsgemäßen Ladestation 1 dargestellt.

Die Ladestation 1 weist die aus dem Stand der Technik bekannten funktionalen Elemente Netzanschluss 3, Vorsicherung 4 und Energiemengenzähler 6 auf.

Weiterhin umfasst die Ladestation 1 erfindungsgemäß eine Ladestrom-Regel- und Überwachungseinrichtung 20, in welcher der Laderegler 12 und eine Differenzstrom-Überwachungseinheit 22 zu einer baulichen Einheit integriert sind.

Außerhalb der Ladestrom-Regel- und Überwachungseinrichtung 20 sind ein separater Messstromwandler 24 und ein als Lastschütz oder als Lastrelais ausgeführtes separates Schaltelement 26 angeordnet.

Der separate Messstromwandler 24, die in der Ladestrom-Regel- und Überwachungseinrichtung 20 angeordnete Differenzstrom-Überwachungseinheit 22 und das separate Schaltelement 26 können als funktionale Elemente einer normgemäßen MRCD-Fehlerschutzeinrichtung 28 aufgefasst werden.

Vorzugsweise sind der separate Messstromwandler 24 und die Differenzstrom-Überwachungseinheit 22 allstromsensitiv ausgeführt.

Die Ladestrom-Regel- und Überwachungseinrichtung 20 steuert über ein Auslösesignal 13 das separate Schaltelement 26 an, um im Fehlerfall (unzulässig hoher Differenzstrom) oder bei Beendigung des Ladevorgangs die Anschlussleitung zu dem Fahrzeuganschluss 16 aufzutrennen.

Der Fahrzeuganschluss 16 kann einen Datenkommunikationskanal 29 zum Datenaustausch von beispielsweise Energiespeicher-spezifischen oder sicherheitstechnischen Daten mit dem Elektrofahrzeug aufweisen.

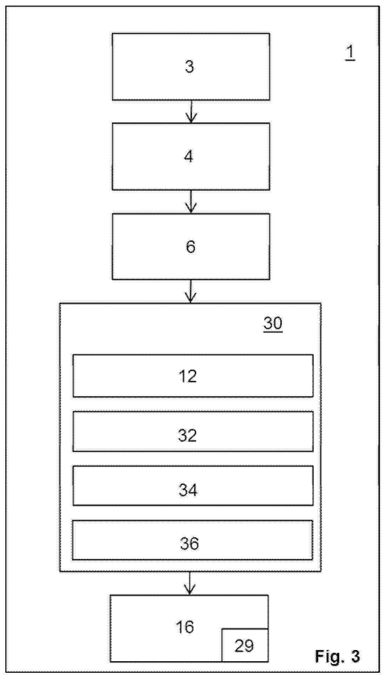

Die **Fig. 3** zeigt ein funktionales Blockdiagramm einer alternativen Ausführungsform einer erfindungsgemäßen Ladestation 1.

Diese alternative Lösung unterscheidet sich von der Lösung in Fig. 2 durch eine Ladestrom-Regel- und Schutzeinrichtung 30, in welcher der Laderegler 12, ein interner Messstromwandler 32, eine Differenzstrom-Überwachungseinheit 34 und ein internes Schaltelement 36 zur Trennung der Fahrzeug-Anschlussleitung zu einer baulichen Einheit integriert sind. In beiden erfindungsgemäßen Lösungen nach den Fig. 2 und 3 entfällt durch den Verzicht auf eine separate Fehlerstrom-Schutzeinrichtung RCD Typ A oder Typ B ein zweites Schaltelement. Dies führt zu einer Verringerung der benötigten Bauteile, mindert den Verschaltungsaufwand und führt damit zu einer Kosteneinsparung bei der Herstellung der Ladestation. Gleichzeitig ist damit eine Reduzierung des erforderlichen Bauraums verbunden, wodurch die Ladestation kompakt gestaltet werden kann.

## Patentansprüche

1. Ladestation (1) zum Aufladen eines elektrischen Energiespeichers eines Elektrofahrzeugs mit einem Wechsel-Ladestrom, mit einer Fehlerstrom-Schutzeinrichtung und mit einem Laderegler (12),
**dadurch gekennzeichnet,**
**dass** die Fehlerstrom-Schutzeinrichtung aus einem separat angeordneten Messstromwandler (24), aus einer Differenzstrom-Überwachungseinheit (22) und aus einem separat angeordneten Schaltelement (26) besteht, wobei die Differenzstrom-Überwachungseinheit (22) mit dem Laderegler (12) eine integrale bauliche Einheit in Form einer Ladestrom-Regel- und Überwachungseinrichtung (20) bildet.

2. Ladestation (1) nach Anspruch 1,
**dadurch gekennzeichnet,**
**dass** der separate Messstromwandler (24) und die Differenzstrom-Überwachungseinheit (22) allstromsensitiv ausgeführt sind.

3. Ladestation (1) nach Anspruch 1 oder 2,
**dadurch gekennzeichnet,**
**dass** das separat angeordnete Schaltelement (26) ein Lastschütz oder ein Lastrelais ist.

4. Ladestation (1) nach einem der Ansprüche 1 bis 3,
**dadurch gekennzeichnet,**
**dass** zwischen der Ladestrom-Regel- und Überwachungseinrichtung (20) und dem an die Ladestation (1) angeschlossenen Elektrofahrzeug ein Datenkommunikationskanal (29) eingerichtet ist.

5. Ladestation (1) zum Aufladen eines elektrischen Energiespeichers eines Elektrofahrzeugs mit einem Wechsel-Ladestrom, mit einer Fehlerstrom-Schutzeinrichtung und mit einem Laderegler (12),
**dadurch gekennzeichnet,**
**dass** die Fehlerstrom-Schutzeinrichtung mit dem Laderegler (12) eine integrale bauliche Einheit in Form einer Ladestrom-Regel- und Schutzeinrichtung (30) bildet, wobei die Ladestrom-Regel- und Schutzeinrichtung (30) neben dem Laderegler (12) einen internen Messstromwandler (32), eine Differenzstrom-Überwachungseinheit (34) und ein internes Schaltelement (36) umfasst.

6. Ladestation (1) nach Anspruch 5,
**dadurch gekennzeichnet,**
**dass** der interne Messstromwandler (32) und die Differenzstrom-Überwachungseinheit (34) allstromsensitiv ausgeführt sind.

7. Ladestation (1) nach Anspruch 5 oder 6,
**dadurch gekennzeichnet,**
**dass** das interne Schaltelement (36) ein Lastrelais ist.

8. Ladestation (1) nach einem der Ansprüche 5 bis 7,
**dadurch gekennzeichnet,**
**dass** zwischen der Ladestrom-Regel- und Schutzeinrichtung (30) und dem an die Ladestation (1) angeschlossenen Elektrofahrzeug ein Datenkommunikationskanal (29) eingerichtet ist.
